# EUROPEAN PATENT APPLICATION

(11) **EP 4 629 158 A1**
(43) Date of publication of application: **08.10.2025**
(21) Application number: 23915564.1
(22) Date of filing: 08.08.2023
(51) Int. Cl.: G06Q 30/0601

(54) **AVIATION ORDER MESSAGE PROCESSING METHOD AND APPARATUS**

(30) Priority: 10.01.2023 CN 202310031685
(71) Applicant: Travelsky Technology Limited, Beijing 101318 (CN)
(72) Inventor: XIONG, Guomin, Beijing 101318 (CN); TU, Weiping, Beijing 101318 (CN); WANG, Yichao, Beijing 101318 (CN); ZENG, Jinjin, Beijing 101318 (CN); JIANG, Hong, Beijing 101318 (CN)
(74) Representative: Meissner Bolte Partnerschaft mbB
(86) International application number: PCT/CN2023/111682
(87) International publication number: WO 2024/148802

(57) **Abstract**

This application provides an aviation order message processing method and apparatus. The method includes: obtaining an aviation order message; obtaining a passenger record number of the aviation order message if the aviation order message is an order message with a special service change identifier, where the aviation order message has a special service change identifier representing that the aviation order message is an order message requesting a change in special service content; determining, in a database, an aviation booking order corresponding to the passenger record number and the number of passengers in the aviation booking order; extracting, in the aviation order message, service type influence information related to a special service type; determining, based on the number of passengers in the order and the service type influence information, special service change information recorded in the aviation order message; and updating information about a special service in the aviation booking order in the database based on the special service change information. The solutions in this application can reduce complexity of changing special service content in the aviation booking order.

## Description

### CROSS REFERENCE TO RELATED APPLICATION

This application claims priority to Chinese Patent Application No. 202310031685.5, filed with the China National Intellectual Property Administration on January, 10, 2023 and entitled "AVIATION ORDER MESSAGE PROCESSING METHOD AND APPARATUS", which is incorporated herein by reference in its entirety.

### TECHNICAL FIELD

This application relates to the technical field of data processing, and in particular to an aviation order message processing method and apparatus.

### BACKGROUND

An open passenger booking system of an airline manages and maintains a customer travel record (CTR) based on an open platform storage technology, and the CTR records data of an entire passenger travel process from booking sales, passenger service, to travel delivery. The airline is responsible for synchronization and management of CTR data of an order, achieving a booking transaction process based on the CTR data, providing airline customers with booking of flights and additional service products, providing differentiated booking services relying on passenger values, supporting airline' booking and retail needs, and tracking changes in passenger booking statuses.

After a flight segment of a foreign airline is booked from the open passenger booking system of the airline, there are often some changes in an aviation booking order of the foreign airline, which is mainly a change in special service content in the aviation booking order. The special service content means whether an aviation order involves special services such as meals and wheelchairs. However, it is relatively difficult to change the special service content in the aviation booking order.

### SUMMARY

In view of this, this application provides an aviation order message processing method and apparatus, to reduce the complexity of changing special service content in an aviation booking order.

To achieve the above purpose, in one aspect, this application provides an aviation order message processing method, including:
obtaining an aviation order message;
obtaining a passenger record number of the aviation order message if the aviation order message is an order message with a special service change identifier, where the aviation order message has the special service change identifier representing that the aviation order message is an order message requesting a change in special service content;
determining, in a database, an aviation booking order corresponding to the passenger record number and the number of passengers in the aviation booking order;
extracting, in the aviation order message, service type influence information related to a special service type;
determining, based on the number of passengers in the order and the service type influence information, special service change information recorded in the aviation order message; and
updating information about a special service in the aviation booking order in the database based on the special service change information.

In another aspect, this application provides an aviation order message processing apparatus, including:
a message obtaining unit, configured to obtain an aviation order message;
a number obtaining unit, configured to obtain a passenger record number of the aviation order message if the aviation order message is an order message with a special service change identifier, where the aviation order message has the special service change identifier representing that the aviation order message is an order message requesting a change in special service content;
a booking order determining unit, configured to determine, in a database, an aviation booking order corresponding to the passenger record number and the number of passengers in the aviation booking order;
an information extraction unit, configured to extract, in the aviation order message, service type influence information related to a special service type;
a change determining unit, configured to determine, based on the number of passengers in the order and the service type influence information, special service change information recorded in the aviation order message; and
a service change unit, configured to update information about a special service in the aviation booking order in the database based on the special service change information.

It can be learned from the above that, in the embodiment of this application, if it is necessary to change the special service content in the aviation booking order, an aviation order message with the special service change identifier may be sent to a server. After determining that the aviation order message is an order message requesting a change in the special service content, the server obtains a passenger record number in the aviation order message. Based on the passenger record number, the server can determine, from the database, an aviation booking order that needs to be changed and the number of passengers in the aviation booking order. Based on this, the server can determine a special service change recorded in the aviation order message in combination with the service type influence information and the number of passengers in the order related to the special service type in the aviation order message, and can update the special service in the aviation booking order in the database based on the special service change information, so that the server can automatically update the information about the special service in the aviation booking order in the database based on the aviation order message with the special service change identifier, reducing the complexity of manual offline interaction and database changes, and reducing the complexity of changing the special service item in the aviation booking order.

### BRIEF DESCRIPTION OF DRAWINGS

In conjunction with accompanying drawings and with reference to the following specific implementations, the above and other features, advantages, and aspects of all embodiments of the disclosure will become more apparent. Identical or similar reference numerals in the drawings indicate same or similar elements. It should be understood that the drawings are schematic, and that components and elements are not necessarily drawn to scale.
FIG. 1 is a schematic flowchart of an aviation order message processing method according to an embodiment of this application;
FIG. 2 is another schematic flowchart of the aviation order message processing method according to an embodiment of this application; and
FIG. 3 is a schematic diagram of a composition structure of an aviation order message processing apparatus according to an embodiment of this application.

### DESCRIPTION OF EMBODIMENTS

Embodiments of the disclosure will be described below in further detail with reference to the accompanying drawings. Although some embodiments of the disclosure are shown in the drawings, it should be understood that the disclosure can be implemented in various forms and should not be construed as confined to the embodiments set forth herein, but rather provided for more thoroughly and completely understanding the disclosure. It should be understood that the drawings and embodiments of the disclosure are for illustrative purposes only and are not intended to limit the scope of protection of the disclosure.

The term "include" and variations used herein are open, namely, "including but not limited to". The term "based on" means "at least partially based on". The term "one embodiment" means "at least one embodiment"; the term "another embodiment" means "at least one another embodiment"; the term "some embodiments" means "at least some embodiments". Related definitions of other terms are given in the following descriptions.

It should be noted that concepts "first", "second", and the like mentioned in the disclosure are only used to distinguish different apparatuses, modules, or units, and are not used to define an order or interdependence of functions performed by these apparatuses, modules, or units.

It should be noted that modifiers of "one" and "a plurality of" mentioned in the disclosure are indicative and not restrictive, and those skilled in the art should understand that the modifiers should be understood as "one or more" unless otherwise expressly specified.

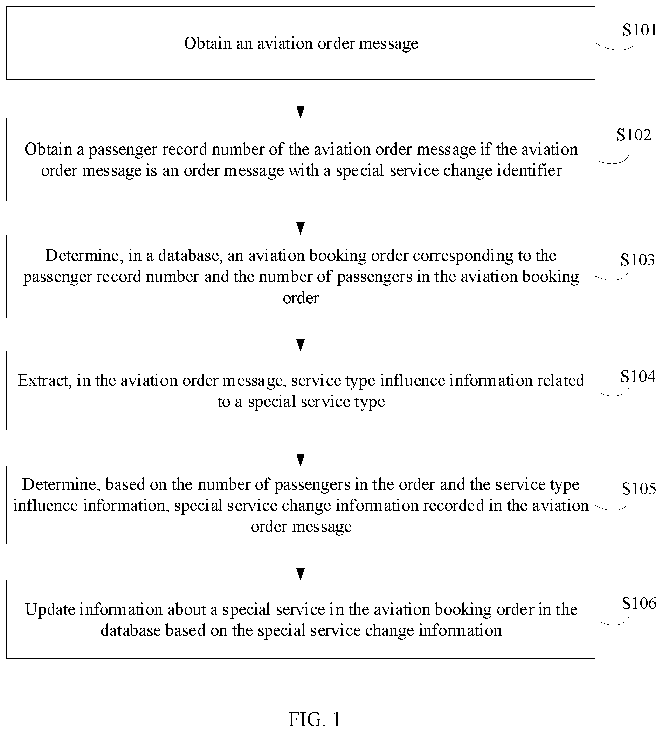

FIG. 1 shows a schematic flowchart of an aviation order message processing method according to an embodiment of this application. The method in this embodiment can be used for a server with an open passenger booking system.

The method in this embodiment may include the following steps.

S101, Obtain an aviation order message.

The aviation order message is an aviation order that is to be processed and that is transmitted to the open passenger booking system over a network and in the form of a message.

S102, Obtain a passenger record number of the aviation order message if the aviation order message is an order message with a special service change identifier.

The special service change identifier is an identifier used to represent a change in a special service item. For example, there is no restriction that the special service change identifier may be a keyword or another form that represents a special service.

Correspondingly, the aviation order message has a special service change identifier representing that the aviation order message is an order message requesting a change in special service content.

Based on this, it can be learned that the server can identify, after the special service change identifier is added to the aviation order message, the order message used to apply for the special service content, that is, identify the aviation order message as a special booking message, so that the aviation order message is distinguished from an ordinary message of the aviation booking order.

It can be understood that in an aviation system, the special services may be some personalized services that are specially requested in addition to a flight service. For example, the special services can include: services for special requirements such as seats, meals, or wheelchairs.

The passenger record number is a number that is generated by the open passenger booking system for an aviation booking order and that can uniquely identify an aviation booking order.

Because the aviation order message is content of the application for modification of the special service, to determine an aviation booking order in which the special service applied for modification in the aviation order message, the aviation booking order requested to be modified in the aviation order message can be identified by extracting a passenger record number carried by the aviation order message.

S103, Determine, in a database, an aviation booking order corresponding to the passenger record number and the number of passengers in the aviation booking order.

A large number of booked aviation booking orders are stored in the database. Each aviation booking order may include some or all of flight information (such as a flight number, date, time, and the like) of a flight applied for booking, user information (such as a name, an ID number, and the like) of each user who applies for the flight, the number of passengers in the order, information related to the special service, and the like.

The number of passengers in the flight booking order means the number of passengers who apply for a flight in the flight booking order. For example, if there is only one passenger in the flight booking order, the number of passengers in the order is one. If there are five passengers in the flight booking order, the number of passengers in the order is five.

Because the passenger record number can uniquely represent one aviation booking order, an aviation booking order corresponding to the aviation order message can be located in the database based on the passenger record number carried in the aviation order message, and the aviation booking order is also the aviation booking order with specific special service content to be changed.

S104, Extract, in the aviation order message, service type influence information related to a special service type.

The service type influence information related to the special service type means information, in the aviation order message, about a specific processing manner for the special service.

It can be understood that some manners for generating the special service in the aviation system can be automatically assigned, some manners are artificially selected, and the special service can alternatively be set for some or all passengers in the aviation booking order. The manners for generating the special service and passengers with the demand are completely or partially different, all of which cause specific special service content and follow-up processing to be different. Based on this, types of the service type influence information related to the special service types can be preset in this application. Correspondingly, information belonging to the service type influence information in the aviation order message can be extracted.

In a possible implementation, if only the same special service is set for all passengers in the aviation booking order when the special service is set, there is no need to use a passenger identifier to distinguish a passenger who requires the special service. If the special service is set for only some passengers in the aviation booking order, the passenger identifier is required to identify a passenger who requires the special service. Based on this, the service type influence information extracted in this application may include the following two types:
detecting, in the aviation order message, whether there is a passenger identifier associated with a special service item, to obtain an identifier detection result; and
extracting, from the aviation order message, a service configuration format associated with the special service item, where the service configuration format is an automatic format or a non-automatic format.

The identifier detection result is used to represent whether there is the passenger identifier associated with the special service item in the aviation order message. The passenger identifier is used to distinguish between different passengers in the aviation booking order. If the special service item is associated with the passenger identifier, it means that the special service item is related to a passenger, and the passenger identifier needs to be used to distinguish the passenger who requires the special service. Conversely, if there is no passenger identifier associated with the special service item, it means that the special service is not associated with the passenger and is a special service generated for the aviation booking order, and the special service is required for all passengers in the aviation booking order.

The service configuration format associated with the special service item means a manner in which the special service is generated. Correspondingly, if the service configuration format is the automatic format, it means that the special service is automatically assigned or generated by the open passenger booking system. If the service configuration format is the non-automatic format, it means that the special service is selected by a passenger and entered manually.

S105, Determine, based on the number of passengers in the order and the service type influence information, special service change information recorded in the aviation order message.

It can be understood that the special service change information is recorded in the aviation order message. However, as the number of passengers in the order and the service type influence information are different, a specific implementation for obtaining the special service change information in the aviation order message is different. Therefore, the special service change information needs to be determined from the aviation order message in combination with the number of passengers in the order and the service type influence information.

For example, in a possible implementation, when the number of passengers in the order and the service type influence information are different, a field area, in the aviation order message, that records the special service change information is different due to a difference in a data length of the special service change information. Accordingly, in this application, a field location area used to record a special service change item in the aviation order message can be determined based on the number of passengers in the order and the service type influence information. Correspondingly, the special service change information recorded in the field location area can be obtained from the aviation order message.

As the number of passengers in the order and specific content of the service type influence information are different, the field location area used to record the special service change item in the aviation order message is different.

Further, based on correspondences between the different number of passengers and a field location and between different service, the field location areas corresponding to the number of passengers in the order and the service type influence information can be determined.

S106, Update information about a special service in the aviation booking order in the database based on the special service change information.

The special service change information may include a specific item of the special service that needs to be changed in the aviation booking order, and based on this, specific information of the special service in the aviation booking order can be updated based on the special service change information.

In actual application, specific special service content in the aviation booking order in the database can also be updated in combination with a situation of a passenger identifier in the service type influence information and the service configuration format of the special service.

For example, the information about the special service in the aviation booking order in the database is updated based on an order update manner corresponding to the service type influence information and in combination with the special service change information.

It can be understood, a specific process of updating the special service in the aviation booking order in the database is also different if the passenger identifier and the service configuration manner for the special service included in the service type influence information is different. For example, in a process of updating an aviation booking order, it is necessary to verify whether it is proper to change the special service for the aviation booking order in different manners, such as whether an assignment condition of the special service is met, based on the service configuration format of the special service and a specific situation of the passenger identifier associated with the special service item.

It can be learned from the above that, in the embodiment of this application, if it is necessary to change the special service content in the aviation booking order, an aviation order message with the special service change identifier may be sent to a server. After determining that the aviation order message is an order message requesting a change in the special service content, the server obtains a passenger record number in the aviation order message. Based on the passenger record number, the server can determine, from the database, an aviation booking order that needs to be changed and the number of passengers in the aviation booking order. Based on this, the server can determine a special service change recorded in the aviation order message in combination with the service type influence information and the number of passengers in the order related to the special service type in the aviation order message, and can update the special service in the aviation booking order in the database based on the special service change information, so that the server can automatically update the information about the special service in the aviation booking order in the database based on the aviation order message with the special service change identifier, reducing the complexity of manual offline interaction and database changes, and reducing the complexity of changing the special service item in the aviation booking order.

In actual application, an operation type of an update operation required for specifically updating the aviation booking order is different depending on one or more passengers in the aviation booking order. A solution in this application is introduced below in combination with a specific implementation.

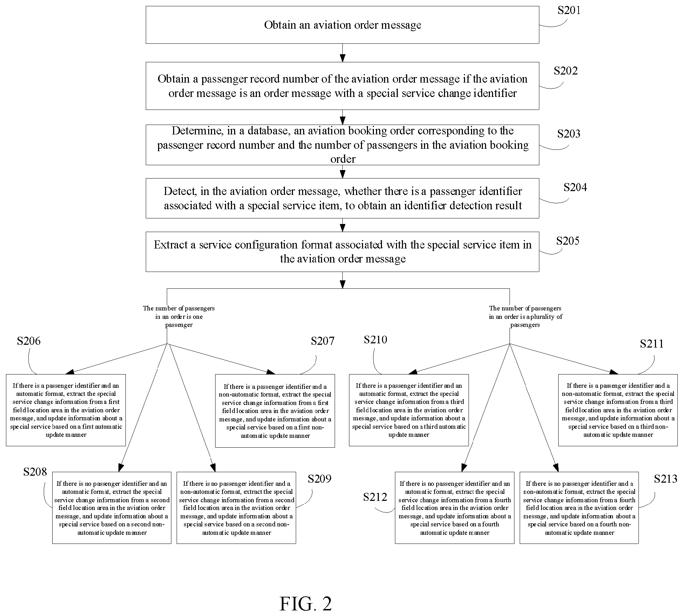

FIG. 2 shows another schematic flowchart of an aviation order message processing method according to an embodiment of this application. The method in this embodiment can be used for a server with an open passenger booking system.

The method in this embodiment may include the following steps.

S201, Obtain an aviation order message.

S202, Obtain a passenger record number of the aviation order message if the aviation order message is an order message with a special service change identifier.

S203, Determine, in a database, an aviation booking order corresponding to passenger record numbers and the number of passengers in the aviation booking order.

S204, Detect, in the aviation order message, whether there is a passenger identifier associated with a special service item, to obtain an identifier detection result.

S205, Extract a service configuration format associated with the special service item in the aviation order message.

A type of the service format is either automatic or non-automatic.

S206, If the number of passengers in an order is one, there is a passenger identifier associated with the special service item in the aviation order message, and the service configuration format is the automatic format, extract special service change information from a first field location area in the aviation order message, and update information about the special service in the aviation booking order in the database in combination with the special service change information based on a first automatic update manner.

S207, If the number of passengers in an order is one, there is a passenger identifier associated with the special service item in the aviation order message, and the service configuration format is the non-automatic format, extract special service change information from a first field location area in the aviation order message, and update information about the special service in the aviation booking order in the database in combination with the special service change information based on a first non-automatic update manner.

S208, If the number of passengers in an order is one, there is no passenger identifier associated with the special service item in the aviation order message, and the service configuration format is the automatic format, extract special service change information from a second field location area in the aviation order message, and update information about the special service in the aviation booking order in the database in combination with the special service change information based on a second automatic update manner.

S209, If the number of passengers in an order is one, there is no passenger identifier associated with the special service item in the aviation order message, and the service configuration format is the non-automatic format, extract special service change information from a second field location area in the aviation order message, and update information about the special service in the aviation booking order in the database in combination with the special service change information based on a second non-automatic update manner.

S210, If the number of passengers in an order is a plurality of passengers, there is a passenger identifier associated with the special service item in the aviation order message, and the service configuration format is the automatic format, extract special service change information from a third field location area in the aviation order message, and update information about the special service in the aviation booking order in the database in combination with the special service change information based on a third automatic update manner.

S211, If the number of passengers in an order is a plurality of passengers, there is a passenger identifier associated with the special service item in the aviation order message, and the service configuration format is the non-automatic format, extract special service change information from a third field location area in the aviation order message, and update information about the special service in the aviation booking order in the database in combination with the special service change information based on a third non-automatic update manner.

S212, If the number of passengers in an order is a plurality of passengers, there is no passenger identifier associated with the special service item in the aviation order message, and the service configuration format is the automatic format, extract special service change information from a fourth field location area in the aviation order message, and update information about the special service in the aviation booking order in the database in combination with the special service change information based on a fourth automatic update manner.

S213, If the number of passengers in an order is a plurality of passengers, there is no passenger identifier associated with the special service item in the aviation order message, and the service configuration format is the non-automatic format, extract special service change information from a fourth field location area in the aviation order message, and update information about the special service in the aviation booking order in the database in combination with the special service change information based on a fourth non-automatic update manner.

In this embodiment, the automatic update manner is to update the special service of the aviation booking order in the database to a special service that is automatically assigned, but operations of service verification and the like, and the special service update that are specifically related to different automatic update manners are different, which can be specifically set according to actual needs and are not specifically described herein.

Similarly, the non-automatic update manner is to update the special service of the aviation booking order in the database to a special service that is not automatically assigned, but operations of service verification and the like, and the special service update that are specifically related to different non-automatic update manners are different, which can be specifically set according to actual needs. Specific operation manners for specific update operations are not limited in this application.

The flowcharts and block diagrams in the accompanying drawings show the system architectures, functions, and operations possibly implemented by systems, methods, and computer program products according to various embodiments of the disclosure. In this regard, each block in the flowcharts or block diagrams may represent a module, a program segment, or a part of a code, and the module, the program segment, or the part of the code includes one or more executable instructions for implementing a specified logical function. It should be also noted that, in some alternative implementations, functions marked in the blocks may also occur in a sequence different from that marked in the accompanying drawings. For example, two consecutive blocks may be actually executed substantially in parallel, or sometimes may be executed in a reverse order, depending on a function related. It should also be noted that each box in the block diagram and/or flowchart, and a combination of the boxes in the block diagram and/or flowchart can be implemented by a dedicated hardware-based system that performs a prescribed function or operation, or by a combination of specialized hardware and computer instructions.

Although all operations are described in a specific order, these operations should not be understood as being required to be performed in the shown specific order or in a sequential order. In a specific context, multitasking and parallel processing can be beneficial.

It should be understood that the steps described in method implementations of the disclosure may be executed in different sequences and/or in parallel. In addition, the method implementations may include additional steps and/or omit steps shown and performed. The scope of the disclosure is not limited in this regard.

Corresponding to the aviation order message processing method provided in this application, this application further provides an aviation order message processing apparatus.

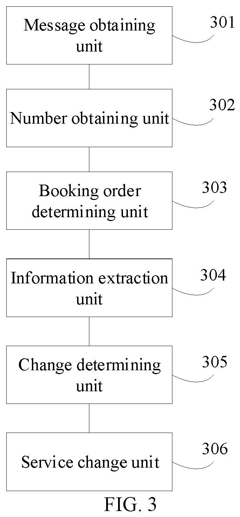

FIG. 3 shows a schematic diagram of a composition structure of an aviation order message processing apparatus according to an embodiment of this application. The apparatus may be applied to the previously mentioned server and includes:
a message obtaining unit 301, configured to obtain an aviation order message;
a number obtaining unit 302, configured to obtain a passenger record number of the aviation order message if the aviation order message is an order message with a special service change identifier, where the aviation order message has the special service change identifier representing that the aviation order message is an order message requesting a change in special service content;
a booking order determining unit 303, configured to determine, in a database, an aviation booking order corresponding to the passenger record number and the number of passengers in the aviation booking order;
an information extraction unit 304, configured to extract, in the aviation order message, service type influence information related to a special service type;
a change determining unit 305, configured to determine, based on the number of passengers in the order and the service type influence information, special service change information recorded in the aviation order message; and
a service change unit 306, configured to update information about a special service in the aviation booking order in the database based on the special service change information.

In a possible implementation, the change determining unit includes:
a field area determining unit, configured to determine, based on the number of passengers in the order and the service type influence information, a field location area, in the aviation order message, in which a special service change item is recorded; and
a change obtaining unit, configured to obtain the special service change information recorded in the field location area of the aviation order message.

In another possible implementation, the field area determining unit includes:
a field area determining sub-unit, configured to determine, based on correspondences between the different number of passengers and a field location and between different service, the field location areas corresponding to the number of passengers in the order and the service type influence information.

In still another possible implementation, the information extraction unit includes:
an identifier detection unit, configured to detect, in the aviation order message, whether there is a passenger identifier associated with a special service item, to obtain an identifier detection result; and
a format extraction unit, configured to extract, from the aviation order message, a service configuration format associated with the special service item, where the service configuration format is an automatic format or a non-automatic format.

In yet another possible implementation, the service change unit includes:
a service change sub-unit, configured to update the information about the special service in the aviation booking order in the database based on an order update manner corresponding to the service type influence information and in combination with the special service change information.

Functions described above in the specification can be performed, at least in part, by one or more hardware logic components. For example, hardware logic components that can be used as examples include, unlimitedly, a field-programmable gate array (FPGA), an application-specific integrated circuit (ASIC), an application-specific standard product (ASSP), a system-on-chip (SOC), a complex programmable logic device (CPLD), and the like.

This application further provides a computer-readable storage medium.

The computer-readable medium carries one or more programs, and when the one or more programs are executed by the electronic device, the electronic device can
obtain an aviation order message;
obtain a passenger record number of the aviation order message if the aviation order message is an order message with a special service change identifier, where the aviation order message has the special service change identifier representing that the aviation order message is an order message requesting a change in special service content;
determine, in a database, an aviation booking order corresponding to the passenger record number and the number of passengers in the aviation booking order;
extract, in the aviation order message, service type influence information related to a special service type;
determine, based on the number of passengers in the order and the service type influence information, special service change information recorded in the aviation order message; and
update information about a special service in the aviation booking order in the database based on the special service change information.

In the context of the disclosure, a machine-readable medium may be a tangible medium that may contain or store programs for use by or in combination with an instruction execution system, apparatus, or device. The machine-readable medium may be either a machine-readable signal medium or machine-readable storage medium. The machine-readable medium may include, but is not limited to, an electronic, magnetic, optical, electromagnetic, infrared, or semiconductor system, apparatus, or device, or any proper combination thereof. A more specific example of the machine-readable storage medium includes an electrical connection based on one or more wires, a laptop disk, a hard disk, a random access memory (RAM), a read-only memory (ROM), an erasable programmable read-only memory (EPROM or flash memory), an optical fiber, a compact disk read-only memory (CD-ROM), an optical storage device, a magnetic storage device, or any proper combination thereof.

It should be noted that the above computer-readable medium in the disclosure may be a computer-readable signal medium, a computer-readable storage medium, or any combination thereof. The computer-readable storage medium may be, for example, but not limited to, an electrical, magnetic, optical, electromagnetic, infrared, or semiconductor system, apparatus, or device, or any combination thereof. A more specific example of the computer-readable storage medium may include, but is not limited to, an electrical connection with one or more wires, a laptop disk, a hard disk, a random access memory (RAM), a read-only memory (ROM), an erasable programmable read-only memory (EPROM or flash), an optical fiber, a portable compact disk read-only memory (CD-ROM), an optical storage device, a magnetic storage device, or any proper combination of thereof. In the disclosure, the computer-readable storage medium may be any tangible medium including or storing a program that may be used by an instruction execution system, apparatus, or device, or be used in combination with an instruction execution system, apparatus, or device. In the disclosure, the computer-readable signal medium may include a data signal propagated in a baseband or propagated as a part of a carrier, where the data signal carries computer-readable program code. Such a propagated data signal may be in a variety of forms, including but not limited to an electromagnetic signal, an optical signal, or any suitable combination thereof. The computer-readable signal medium may alternatively be any computer-readable medium other than the computer-readable storage medium. The computer-readable signal medium may send, propagate, or transmit the program used by the instruction execution system, apparatus, or device, or used in combination with the instruction execution system, apparatus, or device. The program code included in the computer-readable medium may be transmitted by using any suitable medium, including but not limited to Wi-Fi, a wire, an optical cable, RF (radio frequency), and the like, or any suitable combination thereof.

The computer-readable medium may be included in the electronic device, or exist alone and be not integrated into the electronic device.

It should be noted that, although the subject matter has been described in language specific to structural features and/or logical actions of the method, it should be understood that the subject matter defined in the attached claims is not necessarily limited to the specific features or actions described above. Conversely, the specific features and actions described above are only exemplary forms for implementing the claims.

Although several specific implementation details are included in the above description, these should not be interpreted as limiting the scope of the disclosure. Some features described in the context of individual embodiments may also be implemented in combination in a single embodiment. Conversely, various features described in the context of a single embodiment may also be implemented in a plurality of embodiments individually or in any suitable combination of sub-embodiments.

The above descriptions are only preferred embodiments of the disclosure and a description of used technical principles. Those skilled in the art should understand that the scope of the disclosure related in the disclosure is not limited to the technical solutions formed by a specific combination of the above technical features, but shall also cover other technical solutions formed by any combination of the above technical features or equivalent features without departing from the above disclosure concept, for example, a technical solution formed by replacing the above features with (but not limited to) technical features with similar functions disclosed in the disclosure.

## Claims

1. An aviation order message processing method, comprising:
obtaining an aviation order message;
obtaining a passenger record number of the aviation order message if the aviation order message is an order message with a special service change identifier, wherein the aviation order message has the special service change identifier representing that the aviation order message is an order message requesting a change in special service content;
determining, in a database, an aviation booking order corresponding to the passenger record number and the number of passengers in the aviation booking order;
extracting, in the aviation order message, service type influence information related to a special service type;
determining, based on the number of passengers in the order and the service type influence information, special service change information recorded in the aviation order message; and
updating information about a special service in the aviation booking order in the database based on the special service change information.

2. The method according to claim **1, characterized in that** the determining, based on the number of passengers in the order and the service type influence information, special service change information recorded in the aviation order message comprises:
determining, based on the number of passengers in the order and the service type influence information, a field location area, in the aviation order message, in which a special service change item is recorded; and
obtaining the special service change information recorded in the field location area of the aviation order message.

3. The method according to claim 2, **characterized in that** the determining, based on the number of passengers in the order and the service type influence information, a field location area, in the aviation order message, in which a special service change item is recorded comprises:
determining, based on correspondences between the different number of passengers and a field location and between different service, the field location areas corresponding to the number of passengers in the order and the service type influence information.

4. The method according to claim 2, **characterized in that** the extracting, in the aviation order message, service type influence information related to a special service type comprises:
detecting, in the aviation order message, whether there is a passenger identifier associated with a special service item to obtain an identifier detection result; and
extracting, from the aviation order message, a service configuration format associated with the special service item, wherein the service configuration format is an automatic format or a non-automatic format.

5. The method according to claim 1 or 4, **characterized in that** the updating information about a special service in the aviation booking order in the database based on the special service change information comprises:
updating the information about the special service in the aviation booking order in the database based on an order update manner corresponding to the service type influence information and in combination with the special service change information.

6. An aviation order message processing apparatus, comprising:
a message obtaining unit, configured to obtain an aviation order message;
a number obtaining unit, configured to obtain a passenger record number of the aviation order message if the aviation order message is an order message with a special service change identifier, wherein the aviation order message has the special service change identifier representing that the aviation order message is an order message requesting a change in special service content;
a booking order determining unit, configured to determine, in a database, an aviation booking order corresponding to the passenger record number and the number of passengers in the aviation booking order;
an information extraction unit, configured to extract, in the aviation order message, service type influence information related to a special service type;
a change determining unit, configured to determine, based on the number of passengers in the order and the service type influence information, special service change information recorded in the aviation order message; and
a service change unit, configured to update information about a special service in the aviation booking order in the database based on the special service change information.

7. The apparatus according to claim 6, **characterized in that** the change determining unit comprises:
a field area determining unit, configured to determine, based on the number of passengers in the order and the service type influence information, a field location area, in the aviation order message, in which a special service change item is recorded; and
a change obtaining unit, configured to obtain the special service change information recorded in the field location area of the aviation order message.

8. The apparatus according to claim 7, **characterized in that** the field area determining unit comprises:
a field area determining sub-unit, configured to determine, based on correspondences between the different number of passengers and a field location and between different service, the field location areas corresponding to the number of passengers in the order and the service type influence information.

9. The apparatus according to claim 7, **characterized in that** the information extraction unit comprises:
an identifier detection unit, configured to detect, in the aviation order message, whether there is a passenger identifier associated with a special service item, to obtain an identifier detection result; and
a format extraction unit, configured to extract, from the aviation order message, a service configuration format associated with the special service item, wherein the service configuration format is an automatic format or a non-automatic format.

10. The apparatus according to claim 6 or 9, **characterized in that** the service change unit comprises:
a service change sub-unit, configured to update the information about the special service in the aviation booking order in the database based on an order update manner corresponding to the service type influence information and in combination with the special service change information.
